# FASCICULE DE BREVET EUROPEEN

(11) **EP 3 365 951 B1**
(45) Date de publication et mention de la délivrance du brevet: **12.05.2021**
(21) Numéro de dépôt: 16809902.6
(22) Date de dépôt: 19.10.2016
(51) Int. Cl.: H01S 3/10, H01S 3/13, H01S 3/23, H01S 3/00, H01S 3/08, H01S 3/101

(54) **SYSTÈME DE LASER À IMPULSIONS MODULABLE TEMPORELLEMENT EN CADENCE ET/OU EN AMPLITUDE**
PULSLASERSYSTEM MIT ZEITLICH VERÄNDERLICHER WIEDERHOLRATE UND/ODER AMPLITUDE
PULSE LASER SYSTEM WITH TEMPORALLY VARIABLE REPETITION RATE AND/OR AMPLITUDE

(30) Priorité: 19.10.2015 FR 1559952
(43) Date de publication de la demande: 29.08.2018
(73) Titulaire: Amplitude Systemes, 33600 Pessac (FR)
(72) Inventeur: HONNINGER, Clemens, 33610 Cestas (FR); MORIN, Franck, 33610 Canéjan (FR); DELAIGUE, Martin, 33100 Bordeaux (FR)
(74) Mandataire: Jacobacci Coralis Harle
(86) Numéro de dépôt international: PCT/FR2016/052699
(87) Numéro de publication internationale: WO 2017/068282

(56) Documents cités:
- US-A- 5 657 153
- US-A1- 2010 272 137
- US-A1- 2014 050 235
- US-A1- 2015 288 134

## Description

### DOMAINE TECHNIQUE AUQUEL SE RAPPORTE L'INVENTION

La présente invention concerne de manière générale le domaine des lasers à impulsions.

Elle concerne plus particulièrement un système laser à impulsions de forte puissance et/ou de forte énergie, dont les impulsions sont modulables dans le temps. L'invention concerne aussi une méthode de modulation rapide de la cadence et/ou de l'amplitude d'impulsions amplifiées issues d'un système laser, ces impulsions étant de forte puissance et/ou de forte énergie. Elle concerne aussi un procédé de génération d'impulsions laser modulable temporellement, dans une large gamme de fréquence pouvant s'étendre d'une fréquence de répétition très élevée de l'ordre des centaines de MHz ou du GHz jusqu'à une cadence très basse ou même de génération d'une impulsion à la demande.

### ARRIERE-PLAN TECHNOLOGIQUE

La cadence ou fréquence de répétition des impulsions émises par un laser impulsionnel est souvent déterminée en fonction de l'architecture utilisée et des spécifications souhaitées pour le faisceau laser.

Une architecture de type oscillateur maître-amplificateur de puissance (ou MOPA pour Master Oscillator Power Amplifier) est communément utilisée pour réaliser des sources lasers de forte puissance. Dans ce cas, une source 10 appelée oscillateur maître génère un signal source 100 constitué d'impulsions source. Ce signal source 100 est amplifié dans un système amplificateur optique 30 comportant un ou plusieurs étages d'amplification en série. Il existe différents types de sources 10. La source 10 peut être périodique, en particulier une source basée sur un laser à blocage de modes, dont la longueur de la cavité oscillateur définit une fréquence de répétition. Une source 10 périodique peut aussi être basée sur un oscillateur déclenché (Q-switched). Les sources à blocage de mode ou à Q-switch permettent de générer des impulsions de durée picoseconde, mais ne permettent pas de générer d'impulsion à la demande. Par ailleurs, il existe aussi des MOPAs dits nanoseconde ou continu dans lesquels l'oscillateur consiste en une diode pulsée et où la cadence de l'oscillateur n'est pas fixe. Ces MOPAS à diode laser pulsée permettent de générer une impulsion à la demande, mais sont limités par la durée des impulsions, de l'ordre de la nanoseconde.

Dans certaines applications, l'utilisateur peut avoir besoin de faire varier la fréquence de répétition et/ou de moduler l'amplitude d'impulsions laser ultrabrèves ou encore d'interrompre partiellement ou complètement puis de reprendre l'émission d'impulsions laser de forte puissance et/ou de forte énergie.

Le contrôle de l'émission des impulsions laser peut se faire de différentes manières en insérant un dispositif de modulation ou de sélection d'impulsion sur le trajet optique soit en amont soit en aval de l'amplificateur optique.

Une première méthode consiste à utiliser un dispositif réducteur de fréquence pour générer des impulsions à une fréquence de sortie du laser inférieure à la fréquence de répétition de l'oscillateur. Le réducteur de fréquence sélectionne généralement une impulsion sur 2, sur 3 ou sur N et génère donc des impulsions à une fréquence de répétition égale, respectivement la moitié, le tiers ou à un diviseur par N de la fréquence de répétition de l'oscillateur. Une autre méthode consiste à utiliser un dispositif de sélection d'impulsion à la demande, au moyen d'un signal de commande électronique, pour déclencher l'émission d'une impulsion à la demande de l'utilisateur. Encore une autre méthode consiste à utiliser un obturateur rapide en sortie du laser pour éteindre ou allumer le faisceau laser, d'une impulsion à l'impulsion suivante dans le temps.

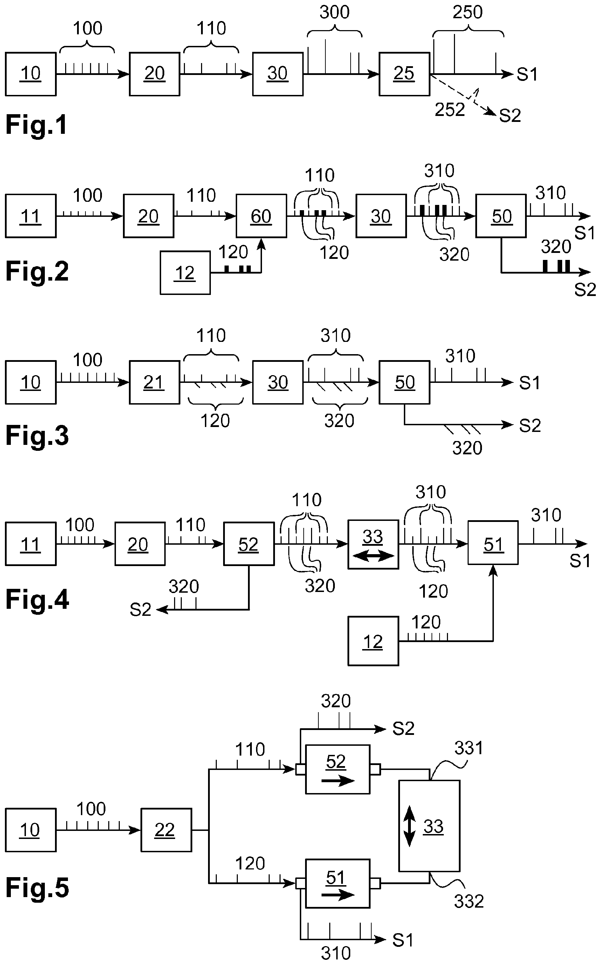

Sur la figure 1, on a représenté un système laser à impulsions modulable temporellement de l'art antérieur. Ce système laser comporte une source 10, un système amplificateur optique 30, un sélecteur d'impulsions 20 disposé entre la source 10 et une entrée du système amplificateur optique 30 et/ou un autre sélecteur d'impulsions 25 disposé en sortie du système amplificateur optique 30. La source 10 est par exemple constituée d'un oscillateur à blocage de mode, qui génère un signal source 100 constitué d'impulsions lumineuses émises à une cadence fixe, en général comprise généralement entre quelques 10 kHz et quelques 10 MHz, ou même jusqu'à quelques GHz. La durée des impulsions lumineuses du signal source 100 est généralement de l'ordre de la femtoseconde ou de la picoseconde. Dans un exemple, le système amplificateur optique 30 est basé sur une architecture de type MOPA. En option, le système amplificateur peut être intégré dans une architecture de type amplificateur à dérive de fréquence (CPA) comprenant un étireur en amont du système amplificateur et un compresseur en aval.

Le sélecteur d'impulsions 20 (ou pulse-picker en anglais) retire une ou plusieurs impulsions lumineuses du signal source 100 en amont du système amplificateur optique 30 et laisse passer un signal modulé 110, constitué d'une ou plusieurs impulsions lumineuses sélectionnées. Le système amplificateur optique 30 amplifie le signal modulé 110 et génère un signal amplifié 300, constitué d'une ou de plusieurs impulsions lumineuses sélectionnées amplifiées. Le sélecteur d'impulsion 20 permet ainsi de réduire la fréquence de répétition des impulsions issues de l'oscillateur 10 avant l'amplification ou même de sélectionner à la demande une ou plusieurs impulsions lumineuses du signal source avant l'amplification. Il existe différents types de sélecteurs d'impulsion 20 notamment de type acousto-optique, basés sur une cellule de Bragg ou électro-optique, par exemple une cellule de Pockels, qui permettent de délivrer une impulsion à la demande en régime mono-impulsion, ou des impulsions périodiques dans une gamme de fréquence comprise généralement entre quelques 10 kHz et quelques 100 MHz, voir quelques GHz, et une puissance RF de quelques W à quelques 10 W pour atteindre l'efficacité de diffraction souhaitée.

Cependant, modifier la fréquence de répétition ou l'intervalle de temps entre impulsions du signal modulé 110 en amont du système amplificateur optique 30 entraîne généralement une modification des paramètres des impulsions du signal amplifié 300. Bien que les impulsions du signal source 100 soient toutes identiques en longueur d'onde, en durée et en énergie, on observe que les impulsions du signal amplifié 300 ne sont pas identiques. En effet, l'énergie et/ou la durée des impulsions du signal amplifié 300, la forme et/ou la qualité du faisceau d'impulsions du signal amplifié 300 peuvent varier en fonction des variations de cadence entre les impulsions sélectionnées du signal modulé 110.

En particulier, lors de la génération d'une série d'impulsions laser, la première impulsion amplifiée présente généralement une énergie et/ou une puissance très supérieure(s) aux impulsions suivantes de la série. Cette surpuissance est due au fait que, le milieu amplificateur étant pompé en continu, l'énergie stockée dans l'amplificateur augmente lorsque l'intervalle temporel entre impulsions augmente. Par conséquent, la première impulsion d'une série extrait du milieu amplificateur une énergie plus importante que les impulsions suivantes. Cette première impulsion surpuissante peut conduire à la dégradation ou même à la destruction de composants du système amplificateur optique 30 ou sur le trajet optique en aval du système amplificateur optique 30 et impacter négativement un procédé laser qui nécessite généralement une énergie constante et stable.

La sélection d'impulsions ou la modulation du signal source en fréquence et/ou en amplitude en amont du système amplificateur optique 30 ne permet donc pas jusqu'à présent de moduler à volonté la fréquence et/ou l'amplitude des impulsions amplifiées 300 en sortie d'un système laser sans affecter les propriétés des impulsions émises.

US 2014/0050235 A1 décrit un système reposant sur l'amplification de deux signaux de longueurs d'onde différentes.

Une autre technique classiquement utilisée pour contrôler l'émission d'un train d'impulsions consiste à placer un modulateur optique 25 (de type acousto-optique ou électro-optique) après le laser. Ce modulateur 25 permet, lorsqu'il est activé, de modifier sélectivement les propriétés en polarisation, direction de propagation, en amplitude et/ou en phase d'une ou plusieurs impulsions qui le traversent de façon à pouvoir ensuite séparer spatialement certaines impulsions amplifiées 250 des autres impulsions amplifiées 252. Cette technique est limitée principalement pour les raisons suivantes. Premièrement, la vitesse actuelle des modulateurs électro-optiques (EO) ou acousto-optiques (AO) disposés en aval de l'amplificateur optique, limite leur utilisation à des cadences maximum de quelques MHz ou d'environ 10 MHz. Deuxièmement, un modulateur optique 25 placé en sortie d'un laser impulsionnel induit des pertes de puissance (de 10 à 20% pour un modulateur acousto-optique, de l'ordre de 5% pour un modulateur électro-optique). Enfin, dans le cas d'un laser de forte puissance, le faisceau laser peut endommager le modulateur optique 25 placé en sortie du système d'amplification 30. Le modulateur optique 25 peut également altérer les paramètres du faisceau laser de sortie : par exemple spatialement sous l'effet d'une lentille thermique, ou encore temporellement, spectralement, ou spatialement par l'action d'effets non linéaires.

US2015/0288134 A1 décrit un système amplificateur optique à cavité régénérative comportant une seule cellule de Pockels intra-cavité.

Il existe donc un besoin pour un système et une méthode permettant de moduler temporellement en cadence et/ou en amplitude un système de laser à impulsions de forte énergie et/ou de forte puissance, la modulation pouvant être rapide jusqu'à la cadence de répétition des impulsions, tout en contrôlant les propriétés des impulsions amplifiées (énergie, durée, forme spatiale, qualité du faisceau) et en assurant la stabilité dans le temps du système d'amplification.

### OBJET DE L'INVENTION

Afin de remédier à l'inconvénient précité de l'état de la technique, la présente invention propose un système laser à impulsions modulable temporellement en cadence et/ou en amplitude comprenant une source adaptée pour générer un signal source constitué d'impulsions lumineuses source et un système amplificateur optique adapté pour recevoir et amplifier ledit signal source, tel que défini dans la revendication 1.

Plus particulièrement, on propose selon l'invention un système laser à impulsions modulable temporellement comprenant un dispositif de sélection ou de modulation d'impulsion configuré pour sélectionner ou moduler le signal source de manière à former un signal principal constitué d'une ou plusieurs impulsions lumineuses, le signal principal étant modulé temporellement en cadence et/ou en amplitude; et le système laser étant configuré pour injecter d'une part le signal principal et d'autre part un signal secondaire dans ledit système amplificateur optique, le système amplificateur optique formant, d'une part, un signal principal amplifié modulé temporellement en cadence et/ou en amplitude et, d'autre part, un signal secondaire amplifié, le signal secondaire étant modulé en temps réel en fonction de la modulation temporelle en cadence et/ou en amplitude du signal principal, de manière à stabiliser l'énergie stockée dans le système amplificateur optique en fonction du temps, et le système laser étant configuré pour séparer spatialement, sur une première sortie, le signal principal amplifié modulé temporellement en cadence et/ou en amplitude, et, sur une deuxième sortie, le signal secondaire amplifié. Le système laser comporte une première source émettant le signal source et une deuxième source émettant le signal secondaire, le dispositif de sélection ou de modulation d'impulsion comportant un sélecteur ou modulateur d'impulsions disposé entre la première source et le système amplificateur optique, le sélecteur ou modulateur d'impulsion recevant le signal source et formant le signal principal.

L'invention permet de moduler de manière contrôlée le train d'impulsions lumineuses amplifiées tout en induisant peu ou aucune perte sur le laser. Le système laser est capable de fonctionner dans une gamme de fréquence s'étendant de la fréquence nulle jusqu'à la fréquence de la source principale, qui peut atteindre l'ordre du GHz, et évite d'exposer un sélecteur d'impulsions, qui est souvent un dispositif optique fragile vis à des d'impulsions amplifiées de forte énergie et/ou de forte puissance, après l'amplification.

D'autres caractéristiques non limitatives et avantageuses du système laser à impulsions modulable temporellement conforme à l'invention, sont les suivantes :
- le système amplificateur optique a une bande spectrale de gain adaptée pour amplifier le signal principal à une première longueur d'onde et le signal secondaire à une seconde longueur d'onde et le système laser comporte un filtre spectral configuré pour séparer spectralement le signal principal amplifié à la première longueur d'onde et le signal secondaire amplifié à la seconde longueur d'onde ;
- le système amplificateur optique est adapté pour recevoir et amplifier le signal principal polarisé suivant un premier état de polarisation et, respectivement, le signal secondaire polarisé suivant un deuxième état de polarisation, lesdits premier et deuxième états de polarisation étant orthogonaux entre eux, et le système laser comporte un filtre séparateur de polarisation disposé et configuré pour séparer, d'une part, le signal principal amplifié polarisé suivant le premier état de polarisation et, d'autre part, le signal secondaire amplifié polarisé suivant le deuxième état de polarisation ;
- le système amplificateur optique est adapté pour amplifier le signal principal et le signal secondaire se propageant en sens mutuellement opposés entre une première entrée-sortie et une deuxième entrée-sortie du système amplificateur optique et le système laser comporte au moins un filtre optique disposé et configuré pour séparer, d'une part, le signal principal amplifié et, d'autre part, le signal secondaire amplifié ;
- le système amplificateur optique présente une ouverture spatiale et/ou angulaire adaptée pour amplifier le signal principal se propageant suivant une première direction et le signal secondaire se propageant suivant une deuxième direction, la deuxième direction étant séparée spatialement et/ou angulairement de la première direction, et le système laser est configuré pour séparer spatialement et/ou angulairement le signal principal amplifié se propageant suivant la première direction et, respectivement, le signal secondaire amplifié se propageant suivant la deuxième direction ;
- le système laser comporte en outre un combineur optique de faisceau disposé et configuré pour injecter d'une part le signal principal et d'autre part le signal secondaire dans ledit système amplificateur optique ;
- le dispositif de sélection ou de modulation d'impulsion comporte un modulateur optique de polarisation, le modulateur optique étant configuré pour recevoir et moduler en polarisation le signal source de manière à générer le signal principal polarisé suivant le premier état de polarisation, et à générer le signal secondaire polarisé suivant le deuxième état de polarisation ;
- le dispositif de sélection ou de modulation d'impulsion comporte un modulateur optique de direction configuré pour recevoir et moduler le signal source de manière à générer le signal principal se propageant suivant une direction, et à générer le signal secondaire se propageant suivant une autre direction ;
- le dispositif de sélection ou de modulation d'impulsion comporte un modulateur optique configuré pour recevoir et moduler en amplitude le signal source périodique de manière à générer le signal principal modulé en amplitude, et dans lequel le signal secondaire est modulé en amplitude en fonction de la modulation temporelle d'amplitude du signal principal.

Selon un autre mode de réalisation, le système amplificateur optique comporte une cavité régénératrice comme défini dans la revendication 10.

De façon avantageuse, le dispositif de modulation d'impulsion est configuré pour sélectionner ou moduler le signal source avec un temps de commutation compris entre sub-ns et quelques ns.

De préférence, la première source est périodique de période de répétition comprise entre 10 kHz et 1 GHz.

Dans les différents modes de réalisation, le dispositif de sélection ou de modulation d'impulsion est commandé électroniquement pour sélectionner ou moduler le signal source avec un temps de commutation de préférence compris entre environ 1 ns et 10ns.

L'invention concerne aussi une méthode de modulation en amplitude et/ou en cadence des impulsions en sortie d'une cavité régénératrice comme défini dans la revendication 13.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement un système laser à impulsions modulé temporellement selon l'art antérieur ;
- la figure 2 représente schématiquement le principe général d'un système laser à impulsions modulé temporellement, selon un premier mode de réalisation l'invention ;
- la figure 3 représente schématiquement un système laser à impulsions modulé temporellement qui ne fait pas partie de l'invention revendiquée
- la figure 4 représente schématiquement un système laser à impulsions modulé temporellement selon un deuxième mode de réalisation de l'invention ;
- la figure 5 représente schématiquement un système laser à impulsions modulé temporellement qui ne fait pas partie de l'invention revendiquée;
- la figure 6 représente schématiquement un système laser à impulsions modulé temporellement qui ne fait pas partie de l'invention revendiquée
- la figure 7 représente schématiquement un système laser à impulsions modulé temporellement qui ne fait pas partie de l'invention revendiquée
- la figure 8 représente schématiquement un système laser à impulsions modulé temporellement selon un cinquième mode de réalisation de l'invention.

Sur la figure 2 on a représenté schématiquement un premier mode de réalisation d'un système laser à impulsions modulé temporellement. Ce premier mode de réalisation repose sur l'utilisation d'un sélecteur d'impulsions 20 disposé en amont de l'amplificateur optique, d'un combineur optique de faisceau configuré pour injecter à la fois un signal principal et un signal secondaire de longueur d'onde et/ou de polarisation différentes dans un système amplificateur optique 30 apte à amplifier ces deux signaux, et d'un dispositif de filtrage spectral et/ou en polarisation adapté pour séparer le signal principal amplifié du signal secondaire amplifié.

Plus précisément, sur le schéma de la figure 2, on a représenté un système laser à impulsions comportant une première source 11, un sélecteur d'impulsions 20, une source secondaire 12, un combineur optique de faisceau 60, un système amplificateur optique 30 et un filtre optique 50.

La première source 11 émet un signal source 100. La première source 11 est constituée par exemple d'un oscillateur périodique qui émet un signal source 100 périodique à une fréquence de répétition fᵣₑₚ déterminée. Un oscillateur périodique peut être constitué d'un laser à blocage de modes

Le système amplificateur optique 30 peut comporter un seul amplificateur optique ou plusieurs amplificateurs optiques disposés en série ou encore plusieurs amplificateurs optiques disposés en parallèle et multiplexés par un coupleur diviseur. Les amplificateurs optiques d'un même système peuvent éventuellement être de nature différente : amplificateur optique solide, à cristal, à disque mince (thin disk laser), à plaque (slab laser), à fibre optique ou fibre à cristaux photoniques. L'amplificateur optique 30 est en général pompé en continu. Le milieu amplificateur optique à gain peut être dopé d'un élément terre rare, en particulier dopé ytterbium, néodyme, erbium, thulium, holmium ou d'un alliage de certains parmi ces éléments terre rare.

Le sélecteur d'impulsions 20 est disposé sur le trajet optique reliant la première source 11 à l'amplificateur optique 30. Le sélecteur d'impulsions 20 comprend par exemple un modulateur acousto-optique ou électro-optique. Le sélecteur d'impulsions 20 est commandé électroniquement pour commuter avec un temps de réponse rapide, du même ordre de grandeur ou légèrement supérieur à la durée séparant deux impulsions successives, et en général compris entre environ 1ns (ou même plus rapide dans certains cas) et quelques ns. Le sélecteur d'impulsions 20 retire (par absorption, déviation par modulation acousto-optique, conversion de polarisation par modulation électro-optique ou acousto-optique en shear-mode) une ou plusieurs impulsions lumineuses du signal source et forme un signal principal 110 constitué d'une ou de plusieurs impulsions lumineuses sélectionnées.

La source secondaire 12 est configurée pour émettre un signal secondaire 120, par exemple constitué d'une ou de plusieurs impulsions lumineuses secondaires, une impulsion lumineuse secondaire étant générée sélectivement à la demande, en fonction de la modulation du signal principal 110. La source secondaire 12 est commandé électroniquement pour commuter avec un temps de réponse rapide en général compris entre ~1ns (dans certains cas même ~ps)... et ~10ns. Par ailleurs, dans le cas où on veut moduler le signal principal à très basse cadence, par exemple pour générer une impulsion amplifiée monocoup à la demande, la durée, pendant laquelle la source secondaire est active, peut aussi être longue, cette durée pouvant être par exemple de plusieurs secondes.

Le combineur optique de faisceau 60 est disposé de manière à recevoir d'une part le signal principal 110 et d'autre part le signal secondaire 120. Le combineur optique de faisceau 60 est sélectionné en fonction des propriétés respectives des signaux de la source principale 11 et de la source secondaire 12. Le combineur optique de faisceau 60 peut être un combineur optique de type spatial, comme un cube ou une lame partiellement transparente et partiellement réfléchissante, ou un combineur de type spectral, par exemple une lame dichroïque, ou encore un combineur en polarisation, par exemple un cube polarisant. Le combineur optique 60 permet d'injecter le signal principal 110 et le signal secondaire 120 dans le système amplificateur optique 30. Le système amplificateur optique 30 amplifie ainsi à la fois le signal principal 110 et le signal secondaire 120, pour former un signal principal amplifié 310 et un signal secondaire amplifié 320.

On se place dans des conditions où le signal secondaire 120 consomme environ la même inversion de population que le signal principal 110 dans l'amplificateur optique 30. Plus précisément, le signal secondaire 120 est modulé temporellement de manière à ce que l'énergie stockée dans l'amplificateur optique reste à un niveau constant en fonction du temps, quelle que soit la modulation temporelle du signal principal 110. Généralement, les impulsions du signal principal 110 et du signal secondaire 120 n'ont pas la même durée et/ou la même énergie. Néanmoins, le signal secondaire 120 est dimensionné de manière à ce que, la combinaison du signal principal 110 et du signal secondaire 120 a pour effet de maintenir le niveau d'inversion de population de l'amplificateur optique 30 à une valeur constante dans le temps, quelle que soit la modulation du signal principal 110. Ainsi, quel que soit l'intervalle temporel séparant deux impulsions sélectionnées consécutives du signal principal 110, le gain du système amplificateur optique 30 reste constant pour chaque impulsion du signal principal amplifié 310. Lorsqu'un signal principal 110 constitué d'impulsions sélectionnées est envoyé dans l'amplificateur optique 30, après une interruption qui retire une ou plusieurs impulsions source, toutes les impulsions sélectionnées du signal principal 110 sont amplifiées avec le même gain.

En pratique, on mesure l'énergie des impulsions du signal principal amplifié 310 en fonction du temps et on modifie la puissance, l'énergie, la longueur d'onde et/ou la durée des impulsions du signal secondaire 120 injecté de manière à stabiliser l'énergie des impulsions du signal principal amplifié 310.

Dans ce premier mode de réalisation, la source secondaire 12 doit pouvoir s'allumer et s'éteindre suffisamment rapidement en fonction du fonctionnement du sélecteur d'impulsion 20. Dans un premier exemple, la source secondaire 12 comprend une diode laser rapidement modulable à une longueur d'onde proche de la longueur d'onde de la source principale 11, les longueurs d'onde de la source principale 11 et de la source secondaire 12 étant situées dans la bande de gain du système amplificateur optique 30. La source secondaire 12 peut être une diode laser du type utilisé dans les télécoms avec une bande passante de l'ordre du GHz. La durée des impulsions émises par cette diode laser 12 est typiquement de l'ordre de la nanoseconde (par exemple de 1 à 20ns). Selon une variante, qui ne fait pas partie de l'invention revendiquée, la source secondaire 12 est constituée d'un deuxième oscillateur à blocage de mode qui est synchronisé en cadence avec l'oscillateur principal de la source principale 11. Cette variante est plus onéreuse qu'une diode télécom mais peut présenter une alternative intéressante lorsqu'aucune diode n'est disponible dans la gamme spectrale souhaitée.

De façon particulièrement avantageuse, le système laser comporte un dispositif de synchronisation reliant le sélecteur d'impulsions 20 à la source secondaire 12, de manière à déclencher l'émission d'une impulsion du signal secondaire 120 lorsque le sélecteur d'impulsions retire une impulsion lumineuse du signal source 100.

Le filtre optique 50 est disposé en sortie de l'amplificateur optique 30. Le filtre optique 50 est configuré de manière à séparer spatialement le signal principal amplifié 310 vers une première sortie S1, et, respectivement, le signal secondaire amplifié 320 vers une deuxième sortie S2. Ce signal secondaire amplifié 320 peut être supprimé ou utilisé pour une autre application.

Dans un exemple de ce premier mode de réalisation, la source principale 11 émet un signal principal 100 à une longueur d'onde principale et la source secondaire 12 un signal secondaire 120 à une longueur d'onde secondaire, différente de la longueur d'onde principale. La source principale 11 et la source secondaire 12 sont sélectionnées de manière à ce que la longueur d'onde principale et la longueur d'onde secondaire soient situées à l'intérieur de la bande de gain de l'amplificateur optique 30. De préférence, le gain de l'amplificateur optique 30 est approximativement identique à la première longueur d'onde et à la deuxième longueur d'onde. Toutefois, la source principale 11 est en général ultrabrève présente une largeur spectrale notée FWHMprince. On choisit une source secondaire ayant des impulsions de durée de l'ordre de la nanoseconde et ayant une largeur spectrale étroite (proche de delta). Afin de séparer le signal principal amplifié 310 du signal secondaire amplifié 320 sans pertes significatives pour le signal principal amplifié 310, on choisit la longueur d'onde secondaire en dehors d'une bande spectrale centrée sur la longueur d'onde principale et de largueur égale à environ 1.5*FWHMprince ou 2*FWHMprince. Dans cet exemple, le combineur de faisceau 60 est par exemple un filtre dichroïque apte à combiner le signal principal 110 à la longueur d'onde principale et le signal secondaire 120 à la longueur d'onde secondaire. Avantageusement, le filtre optique 50 est un filtre dichroïque sélectionné de manière à permettre de séparer spectralement, d'une part, le signal principal amplifié 310 à la longueur d'onde principale et, d'autre part, le signal secondaire amplifié 320 à la longueur d'onde secondaire. La diode laser 12 peut être modulée très rapidement de manière à injecter le signal secondaire 120 via le combineur de faisceau 60. La puissance, l'énergie, la longueur d'onde et/ou la durée de la diode laser 12 peuvent être ajustées de manière à ce que le signal secondaire 120 consomme environ le même gain que le signal principal 110. Ce mode de réalisation permet ainsi de contrôler la stabilité du signal principal amplifié 310.

Cet exemple du premier mode de réalisation peut être appliqué à tout amplificateur optique 30 ayant un milieu à gain dont la bande spectrale d'amplification est suffisamment large pour amplifier deux signaux de longueurs d'onde différentes et séparables par un filtre spectral 50.

Dans une variante, le signal principal 110 et le signal secondaire 120 sont polarisés suivant des états de polarisation respectivement orthogonaux entre eux, le système amplificateur optique étant adapté pour amplifier des signaux suivant ces états de polarisation orthogonaux. Dans cette variante, le filtre optique 50 comporte un filtre polarisant, par exemple un polariseur configuré pour séparer spatialement le signal principal amplifié 310 sur la sortie S1 et le signal secondaire amplifié 320 sur la sortie S2. Le combineur de faisceau est par exemple un polariseur configuré pour combiner le signal principal 110 polarisé suivant un premier état de polarisation et le signal secondaire 120 polarisé suivant un deuxième état de polarisation.

Sur la figure 3 on a représenté schématiquement une variante du premier mode de réalisation d'un système laser, basé sur une modulation de la polarisation. Dans cette variante, qui ne fait pas partie de l'invention revendiquée, les mêmes éléments sont représentés par les mêmes signes de référence que sur la figure 2. Une seule source 10 remplace la source principale 11 et la source secondaire 12. La source 10 émet un signal source 100 constitué d'impulsions, en général à une fréquence de répétition fᵣₑₚ déterminée. Dans cette variante, on utilise un modulateur de polarisation 21. Les impulsions lumineuses du signal source 100 sont ici polarisées suivant un premier état de polarisation, par exemple linéaire ou circulaire ou elliptique. Le modulateur de polarisation 21 est configuré pour permettre de commuter rapidement la polarisation du signal source entre un premier état de polarisation et un second état de polarisation, orthogonal au premier état de polarisation. Le temps de commutation du modulateur de polarisation 21 est de préférence compris entre 1ns et quelques ns. Le modulateur de polarisation 21 est par exemple constitué d'un modulateur électro-optique basé sur une cellule de Pockels ou d'un modulateur acousto-optique. A titre d'exemple, le modulateur de polarisation 21 est un modulateur de phase qui introduit sélectivement soit un déphasage égal à 0 pour former le signal principal 110 constitué d'impulsions polarisées suivant le premier état de polarisation, soit un déphasage égal à Π pour former le signal secondaire 120 constitué d'impulsions polarisées suivant le second état de polarisation. Le système amplificateur optique 30 amplifie d'une part le signal principal 110 pour former un signal principal amplifié 310 polarisé suivant le premier état de polarisation, et respectivement, le système amplificateur optique 30 amplifie le signal secondaire 120 pour former un signal secondaire amplifié 320 polarisé suivant le second état de polarisation. En sortie du système amplificateur optique 30, un filtre optique de type polariseur 52 est disposé et orienté de manière à permettre de séparer spatialement, sur la sortie S1, le signal principal amplifié 310 constitué d'impulsions amplifiées polarisées suivant le premier état de polarisation, et, respectivement, sur la sortie S2, le signal secondaire amplifié 320 constitué d'impulsions amplifiées polarisées suivant le second état de polarisation.

Dans un exemple de réalisation, la source 10 est une source fibrée et l'amplificateur optique 30 comporte une fibre optique amplificatrice. La fibre optique amplificatrice peut être une fibre à maintien de polarisation ou une fibre standard disposée dans un environnement contrôlé de manière à maintenir le premier état de polarisation et le second état de polarisation. La sélection des impulsions du signal principal 110 est effectuée électroniquement par un système de contrôle commande du modulateur de polarisation 21. Par construction, les impulsions lumineuses du signal principal 110 et du signal secondaire 120 ont la même longueur d'onde, la même puissance. L'amplificateur optique 30 présente ainsi un niveau d'inversion de population constant quelle que soit la modulation de polarisation du signal principal.

Le signal principal amplifié 310 et le signal secondaire amplifié 320 peuvent être utilisés indépendamment l'un de l'autre. Dans une application, le modulateur de polarisation 21 sélectionne une impulsion sur deux ce qui permet de disposer en sortie du système amplificateur de deux faisceaux laser constitués d'impulsions périodiques amplifiées, chaque sortie étant à une fréquence de répétition égale à la moitié de la fréquence de répétition de la source 10. On obtient ainsi deux sorties laser à impulsions périodiques pour un coût moindre que celui de deux systèmes laser complets.

On dispose ainsi d'une porte optique permettant de libérer ou non les impulsions du laser sans changer les valeurs paramétriques (énergie, durée, forme spatiale..) des impulsions amplifiées 310, et qui est suffisamment rapide pour s'ouvrir ou se fermer d'une impulsion à l'autre. La vitesse de changement d'état de cette porte optique définit la cadence maximale à laquelle le dispositif est capable de fonctionner.

Dans ces exemples du premier mode de réalisation, on a décrit la sélection d'un signal principal constitué de la totalité d'une ou de plusieurs impulsions principales à partir d'un signal source périodique.

Plus généralement, le signal principal peut être constitué d'une partie du signal source modulé en amplitude en fonction du temps. Ainsi, au lieu de sélectionner ou pas une impulsion entière, on sélectionne au moins une impulsion principale constituée d'une partie d'une impulsion source. Par exemple, on sélectionne 80% de l'énergie d'une impulsion source. L'amplitude de l'impulsion sélectionnée peut varier d'une impulsion à l'autre selon les besoins. De manière analogue au principe de la présente divulgation, on injecte un signal secondaire adapté pour compenser les variations en amplitude des impulsions du signal principal de manière à stabiliser le gain du système amplificateur optique, quelle que soit l'amplitude de modulation du signal principal. L'injection simultanée dans l'amplificateur optique du signal principal modulé en amplitude et du signal secondaire produit une compétition entre l'amplification de ces deux signaux. Les gains d'amplification respectifs du signal principal et du signal secondaire peuvent être différents. Par exemple, on modifie l'amplitude, l'énergie et/ou la durée du signal secondaire injecté de manière à maintenir une inversion de population des ions excités dans le système amplificateur optique essentiellement constante en fonction du temps. De préférence, on ajuste l'intensité du signal secondaire en fonction de l'intensité du signal principal pour que le gain saturé de l'amplificateur optique reste constant. On génère ainsi une modulation d'amplitude analogique du signal principal amplifié tout en assurant un gain constant dans le système amplificateur optique. Le signal principal amplifié et le signal secondaire amplifié sont ensuite séparés spatialement selon l'un quelconque des exemples décrits.

Dans un exemple de réalisation de cette modulation d'amplitude, qui ne fait pas partie de l'invention revendiquée, un modulateur de polarisation 21 permet non seulement de commuter l'état de polarisation de la source mais en outre de moduler l'amplitude des impulsions sélectionnées du signal principal 110. Cette modulation d'amplitude est obtenue lorsqu'une fraction du premier état de polarisation peut être transformée suivant le second état de polarisation. Par exemple, un modulateur de polarisation 21 de type électro-optique peut être contrôlé pour introduire un déphasage compris entre 0 et une demi-longueur d'onde. De manière analogue, un modulateur de polarisation de type acousto-optique peut être contrôlé pour produire une efficacité de diffraction différente entre l'ordre 0 et l'ordre 1. Ainsi, de manière générale, le signal principal 110 injecté dans le système amplificateur optique est constitué d'une partie du signal source 100, et le signal secondaire 120 injecté dans le système amplificateur optique est modulé temporellement en fonction des variations temporelles du signal principal 110, de manière à ce que le niveau d'inversion de population de l'amplificateur optique reste constant quelles que soient les variations temporelles du signal principal.

Sur la figure 4, on a représenté schématiquement un système laser à impulsions modulé temporellement en cadence et/ou en amplitude selon un deuxième mode de réalisation de l'invention.

Ce deuxième mode de réalisation repose sur l'utilisation d'un système amplificateur optique 33 bidirectionnel, c'est-à-dire apte à amplifier deux faisceaux se propageant en sens mutuellement opposés à l'intérieur du système amplificateur optique 33. Dans ce deuxième mode de réalisation, l'injection du signal secondaire 120 dans le système amplificateur optique 30 se fait en sens opposé du signal principal 110.

Le système laser de la figure 4 comporte une source principale 11 et une source secondaire 12. Un sélecteur ou modulateur d'impulsions 20, de type acousto-optique ou électro-optique, est disposé entre la source principale 11 et une première entrée-sortie d'un système amplificateur optique 33 bidirectionnel. Le sélecteur ou modulateur d'impulsions 20 retire une partie d'impulsion, ou une ou plusieurs impulsions lumineuses du signal source 100, de préférence périodique, sur le trajet optique reliant la source 10 à l'amplificateur optique 33 et laisse passer un signal principal 110 constitué d'une partie du signal source, par exemple d'une partie d'une ou de plusieurs impulsions lumineuses sélectionnées, en direction du système amplificateur optique 33. Le signal principal 110 se propage dans l'amplificateur optique 33 bidirectionnel suivant un premier sens de propagation. Le temps de commutation du sélecteur ou modulateur d'impulsions 20 est de préférence compris entre ~1ns (voir sub-ns) et ~10ns. Le signal principal 110 est amplifié de manière à former un signal principal amplifié 310 se propageant dans le premier sens de propagation.

La source secondaire 12 émet un signal secondaire 120, modulé en fonction de la modulation en amplitude et/ou en cadence du signal principal 110. Un filtre optique 51 est disposé entre la source secondaire 12 et une deuxième entrée-sortie du système amplificateur optique 33. Le filtre optique 51 peut être choisi parmi un filtre spatial (beam combiner), directionnel (circulateur ou isolateur optique), spectral ou polarisant, selon les caractéristiques du signal principal et du signal secondaire. Le filtre optique 51 injecte le signal secondaire 120 dans le système amplificateur optique 33 bidirectionnel par une deuxième entrée-sortie, de manière à ce que le signal secondaire 120 se propage en sens opposé au signal principal dans le système amplificateur optique 33 bidirectionnel. Ainsi, le signal secondaire 120 est amplifié de manière à former un signal secondaire amplifié 320 se propageant en sens opposé au premier sens de propagation. De plus, le filtre optique 51 permet de séparer le signal principal amplifié 310 du signal secondaire 120 pour diriger le signal principal amplifié 310 vers la première sortie S1.

Un autre filtre optique 52 est disposé entre le sélecteur ou modulateur d'impulsions 20 et la première entrée-sortie du système amplificateur optique 33. Ce filtre optique 52 sépare spatialement le signal secondaire amplifié 320 du signal principal 110 et dirige le signal secondaire amplifié 320 vers la deuxième sortie S2. De préférence, le filtre optique 52 est un filtre passif, par exemple un miroir dichroïque si on utilise des sources 11, 12 de longueurs d'onde différentes ou un polariseur si on utilise des signaux 110, 120 polarisés suivant deux états de polarisation différents, ou encore un circulateur ou isolateur optique.

Ce deuxième mode de réalisation est particulièrement adapté aux amplificateurs à fibre optique, qui sont en général bidirectionnels mais qui ne permettent généralement pas une séparation spatiale et/ou angulaire des faisceaux.

Sur la figure 5, on a représenté schématiquement un système laser à impulsions modulé temporellement selon une alternative qui ne fait pas partie de l'invention revendiquée. Le système laser comporte une source principale 10, qui émet un signal source 100 périodique constitué d'impulsions lumineuses à une fréquence de répétition fᵣₑₚ déterminée. Les impulsions lumineuses du signal source 100 sont ici polarisées suivant un premier état de polarisation, par exemple linéaire ou circulaire ou elliptique. Un modulateur optique 22 forme à partir du signal source 100, d'une part, le signal principal 110 dirigé vers une première entrée-sortie de l'amplificateur optique 33 et, d'autre part, le signal secondaire 120 dirigé vers la seconde entrée-sortie de l'amplificateur optique 33. Ici, un isolateur optique 51 permet de séparer le signal principal amplifié 310 sur la sortie S1. Un autre isolateur optique 52 permet de séparer le signal secondaire amplifié 320 sur la sortie S2.

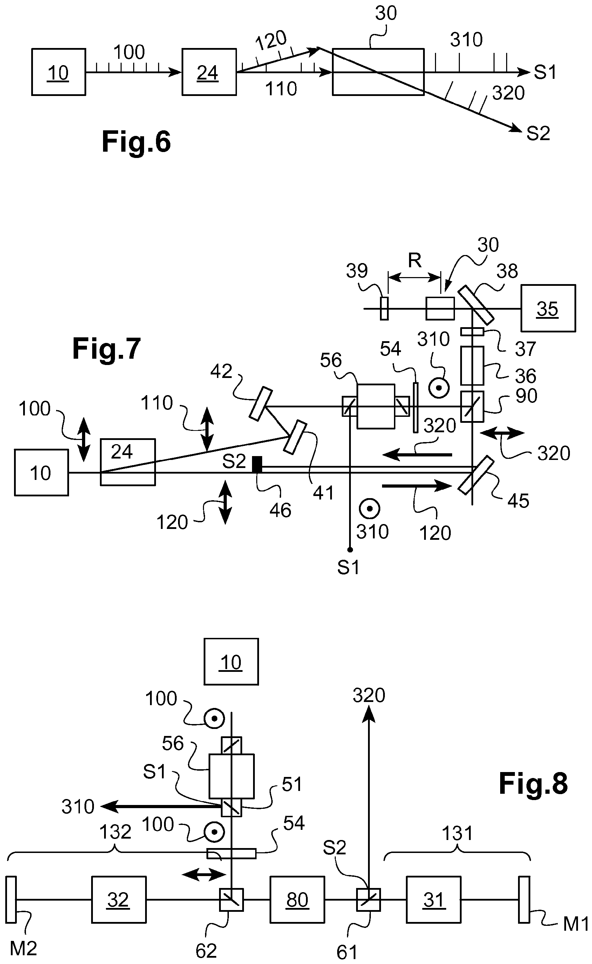

Sur la figure 6, on a représenté schématiquement un système laser à impulsions modulé temporellement selon un troisième mode de réalisation qui ne fait pas partie de l'invention revendiquée.

Ce troisième mode de réalisation repose sur l'utilisation d'un système amplificateur optique 30 ayant une étendue spatiale et/ou une ouverture angulaire suffisante pour amplifier deux faisceaux d'impulsions laser séparés spatialement et/ou angulairement.

Le système de la figure 6 comporte une source 10 qui émet un signal source périodique 100 constitué d'impulsions lumineuses périodiques à une fréquence de répétition fᵣₑₚ. Un modulateur optique 24 est disposé entre la source 10 et le système amplificateur optique 30, sur le chemin optique des impulsions source 100. Le modulateur optique 24 est adapté et configuré pour séparer spatialement et/ou angulairement le signal source périodique 100, d'une part, en un signal principal 110 qui se propage suivant une direction de propagation, par exemple identique à la direction de propagation du signal source périodique 100, et, d'autre part, en un signal secondaire 120, qui est par exemple dévié angulairement par rapport à la direction de propagation du signal principal 110. Le modulateur optique 24 est par exemple un modulateur acousto-optique configuré pour permettre de dévier le signal secondaire 120. Le temps de commutation du modulateur optique 24 est compris entre ~1ns et 10ns. Le signal principal 110 est dirigé vers l'amplificateur optique 30 suivant une première direction de propagation et amplifié pour former un signal principal amplifié 310. L'amplificateur optique 30 a une étendue spatiale et/ou une ouverture angulaire suffisamment grande pour accepter le signal secondaire 120 se propageant suivant une deuxième direction. Si nécessaire, un système optique à miroir est disposé sur le chemin optique du signal principal et/ou du signal secondaire, pour augmenter la séparation spatiale et/ou angulaire entre le signal principal et le signal secondaire dans l'amplificateur optique 30. Le signal secondaire 120 se propage à l'intérieur de l'amplificateur optique 30 suivant une deuxième direction de propagation, séparée spatialement et/ou angulairement de la première direction de propagation. L'amplificateur optique 30 amplifie le signal principal 110, respectivement le signal secondaire 120, pour former un signal principal amplifié 310 se propageant suivant la première direction, et, respectivement, un signal secondaire amplifié 320 se propageant suivant une deuxième direction angulaire. Avantageusement, la première et la seconde direction de propagation sont suffisamment séparées spatialement et/ou angulairement pour permettre d'utiliser sélectivement le signal principal amplifié 310 sur la sortie S1, et éventuellement, le signal secondaire amplifié 320 sur la sortie S2. Dans ce troisième mode de réalisation, le filtrage après amplification est un filtrage de type spatial et/ou angulaire. Si nécessaire, un dispositif de filtrage spatial, par exemple basé sur un ou plusieurs miroirs, est placé en sortie du système amplificateur optique et configuré pour augmenter la séparation spatiale et/ou angulaire entre les deux signaux amplifiés 310, 320.

Ce troisième mode de réalisation s'applique en particulier à un amplificateur optique à base de cristal dopé Yb, Nd, Er, Tm, Ho, Ti et/ou Cr, par exemple un cristal d'Yb:YAG, de néodyme-YAG (Nd :YAG) ou de titane-saphir, ou encore Er :YAG, Tm :YAG, Ho :YAG.

La figure 7 représente schématiquement un exemple de réalisation de système laser à impulsions modulé temporellement selon un quatrième mode de réalisation qui ne fait pas partie de l'invention revendiquée.

Le système laser de la figure 7 comporte une source 10 qui émet un signal source 100 périodique constitué d'impulsions lumineuses polarisées linéairement, par exemple suivant un état de polarisation ***p*,** parallèle au plan de la figure 7. Le système laser comporte un modulateur acousto-optique 24. Dans un premier état du modulateur acousto-optique 24, lorsqu'une tension de modulation adaptée est appliquée au modulateur acousto-optique 24, le signal source est dévié par diffraction dans l'ordre 1 et forme un signal principal 110 se propageant suivant une première direction de propagation. Au contraire, lorsqu'une tension de modulation nulle est appliquée au modulateur acousto-optique 24, le signal source n'est pas dévié et forme un signal secondaire 120 se propageant suivant une seconde direction de propagation, séparée angulairement de la première direction de propagation. En sortie du modulateur acousto-optique 24, le signal principal 110 et le signal secondaire 120 ont le même état de polarisation, ici l'état de polarisation ***p.*** Un système optique à miroirs 41, 42 permet de diriger le signal principal 110 vers un isolateur optique 56. Une lame demi-onde 54 (λ/2) permet de changer l'état de polarisation du signal principal 110 en l'état de polarisation linéaire orthogonal, ici l'état de polarisation **s.** Un autre système optique à miroir 45 permet de diriger le signal secondaire 120 vers un polariseur 90. Le polariseur 90 permet de combiner le signal principal 110 polarisé **s** se propageant suivant un premier chemin optique avec le signal secondaire 120 polarisé **p** se propageant suivant un second chemin optique. En sortie du polariseur 90, le signal principal 110 polarisé **s** se propage suivant une direction de propagation différente du signal secondaire 120 polarisé **p,** bien que l'écart angulaire entre ces deux signaux soit réduit comparé avec l'écart angulaire en sortie du modulateur acousto-optique 24. Un système optique constitué par exemple d'un télescope afocal 36 suivi d'une lentille de focalisation 37 et d'un miroir dichroïque 38 permet de diriger le signal principal 110 polarisé **s** et le signal secondaire 120 polarisé **p** vers le cristal amplificateur optique 30. Une source de pompe 35 assure le pompage optique en continu du cristal amplificateur optique 30 grâce au couplage par le miroir dichroïque 38. Un miroir de focalisation 39, ayant un rayon de courbure R centré sur le cristal amplificateur optique 30 permet d'effectuer un double passage des signaux à amplifier dans le cristal amplificateur optique 30. A l'intérieur du cristal amplificateur optique 30 le signal principal 110 polarisé **s** se superpose avec le signal secondaire 120 polarisé **p,** pour assurer la constance du gain de l'amplificateur optique 30. Après double amplification dans le cristal amplificateur optique 30, un signal principal amplifié 310 et un signal secondaire amplifié 320 sont dirigés vers le polariseur 90. Ce polariseur 90 permet de séparer spatialement le signal principal amplifié 310 et le signal secondaire amplifié 320. Le signal principal amplifié 310 polarisé **s** en sortie du polariseur 90 traverse la lame demi-onde 54 qui change l'état de polarisation du signal principal amplifié 310 en l'état de polarisation linéaire orthogonal, ici l'état de polarisation **p.** L'isolateur optique 56 permet d'extraire le signal principal amplifié 310 polarisé **p** sur la sortie S1. Ce signal principal amplifié 310 peut ensuite être transmis vers un compresseur ou pour toute application considérée. D'autre part, le signal secondaire amplifié 320 est réfléchi sur le miroir 45 en direction d'une sortie S2, par exemple un dispositif d'absorption 46 (ou beam dump).

Dans cet exemple de réalisation, le modulateur optique 24 est disposé sur le trajet optique de la source 10 et module donc le signal source périodique 100 de faible puissance. Cette configuration assure une modulation avec une forte efficacité tout en évitant l'endommagement du modulateur optique 24. De plus, cette modulation est rapide, car le temps de commutation du modulateur optique 24 est compris entre ~1ns (voir sub-ns) et ~10ns. Le signal source périodique diffracté dans l'ordre 1 est diffracté avec une efficacité de diffraction d'environ 85% ou plus. Ce faisceau diffracté dans le premier ordre forme un signal principal 110 constitué d'une partie du signal source périodique. Les pertes sont donc très limitées sur le signal principal 110. Lorsque le modulateur acousto-optique est activé, le faisceau résiduel non dévié dans l'ordre 0 est également amplifié dans le cristal amplificateur optique 30. Toutefois, le recouvrement est plus important avec le signal principal diffracté dans l'ordre 1 comparé avec le recouvrement du faisceau résiduel non diffracté dans l'ordre 0, si bien que le faisceau non diffracté dans l'ordre 0 voit un gain plus faible. Lorsque le modulateur acousto-optique 24 est inactif, le faisceau d'impulsions n'est pas diffracté dans l'ordre 1. Le signal secondaire 120 est amplifié dans le cristal amplificateur optique 30 puis le signal secondaire amplifié 320 est séparé spatialement par le polariseur 90 et bloqué dans le dispositif d'absorption 46.

Sur la figure 8, on a représenté schématiquement un système laser à impulsions modulé temporellement selon un cinquième mode de réalisation de l'invention. Ce cinquième mode de réalisation repose sur l'utilisation d'un laser à cavité régénérative comportant un seul et unique modulateur optique 80 disposé à l'intérieur de la cavité régénérative. Ce modulateur optique 80 sert à la fois de sélecteur d'impulsions et de modulateur optique pour orienter les impulsions soit vers une sortie première S1 soit vers deuxième sortie S2, en fonction de l'instant de commutation du modulateur optique.

Dans un amplificateur à cavité régénérative de l'art antérieur, un premier modulateur optique sert de commutateur optique disposé à l'intérieur de la cavité optique pour injecter et une seule impulsion à la fois dans la cavité régénérative, de préférence avec une fréquence de répétition constante dans le temps. Un second modulateur optique est en général disposé en sortie de la cavité régénérative pour moduler spatialement et/ou temporellement les impulsions amplifiées. Ces deux modulateurs optiques peuvent être de type acousto-optique ou de type cellule de Pockels.

Le système de la figure 8 comporte une source 10 qui génère un signal source 100 périodique constitué d'impulsions lumineuses. La source 10 est par exemple un oscillateur ayant une fréquence de répétition f_{osc}. Les impulsions lumineuses du signal source 100 sont ici polarisées linéairement suivant l'état de polarisation s. Un isolateur optique 56 forme une première entrée-sortie de la cavité régénérative. Une lame 54 demi-onde (λ/2) change l'état de polarisation des impulsions lumineuses du signal source 100 en l'état de polarisation p. Un polariseur 53 transmet le signal source 100 polarisé p en direction d'une cellule de Pockels 80.

La cavité régénérative comporte une première partie amplificatrice 131, une seconde partie amplificatrice 132 et une cellule de Pockels 80 disposée entre cette première partie amplificatrice 131 et cette seconde partie amplificatrice 132. La première partie amplificatrice 131 de la cavité régénérative comprend un premier amplificateur optique 31 disposé entre un premier miroir M1 et un polariseur 61. De manière analogue, la seconde partie amplificatrice 132 de la cavité régénérative comprend un second amplificateur optique 32 disposé entre un second miroir M2 et un autre polariseur 62. La cellule de Pockels est ainsi placée entre le polariseur 61 et le polariseur 62.

Lorsqu'aucune impulsion n'est piégée dans la cavité régénératrice et que la cellule de Pockels 80 est au repos (c'est-à-dire la tension de modulation appliquée à la cellule de Pockels étant nulle), une impulsions source 100, polarisée **p** qui est réfléchie par le polariseur 62 et traverse la cellule de Pockels 80 reste polarisée **p.** Le polariseur 61 est orienté de manière à transmettre uniquement la polarisation s dans la première partie amplificatrice 131 de la cavité régénératrice et à transmettre la polarisation p vers une sortie S2. Ainsi, tant que le modulateur reste inactif, aucune impulsion source polarisée **p** n'entre dans la première partie amplificatrice 131 de la cavité régénératrice.

Le piégeage d'impulsion et l'amplification régénérative d'impulsion s'effectue de la manière suivante. Lorsque la cellule de Pockels 80 est activée, la tension de modulation appliquée à la cellule de Pockels est telle que la cellule de Pockels produit un déphasage demi-onde. La cellule de Pockels activée reçoit une impulsion source 100 polarisée **p** et change la polarisation de cette impulsion constituant le signal source 100 en polarisation **s.** Le polariseur 52 transmet cette impulsion source 100 polarisée **s** en direction de la première partie amplificatrice 131 de la cavité régénérative. L'impulsion source polarisée **s** est amplifiée une première fois en traversant le premier amplificateur optique 31 en direction du miroir M1, puis se réfléchit sur le miroir M1, et est amplifiée une deuxième fois en traversant le premier amplificateur optique 31 en direction du polariseur 52. On commute la tension de modulation de la cellule de Pockels 80 d'un déphasage demi-onde à un déphasage nul pendant que cette impulsion source 100 polarisée **s** circule dans la première partie 131 de la cavité régénérative et avant qu'elle ne retraverse la cellule de Pockels une deuxième fois. Ainsi, la cellule de Pockels ne modifie pas la polarisation s d'une impulsion amplifiée sortant de la première partie amplificatrice 131 de la cavité régénératrice. Le polariseur 53 transmet cette impulsion amplifiée polarisée **s** en direction de la seconde partie amplificatrice 132 de la cavité régénérative. L'impulsion polarisée **s** est amplifiée à nouveau en traversant le second amplificateur optique 32 en direction du miroir M2, puis se réfléchit sur le miroir M2, et est amplifiée une deuxième fois en traversant second amplificateur optique 32 en direction du polariseur 53, tout en restant polarisée **s.** Ainsi, une impulsion polarisée **s** se trouve piégée et amplifiée de manière cyclique dans la première partie amplificatrice 131 puis dans la seconde partie amplificatrice 132 de la cavité régénérative. Tant que la tension de la cellule de Pockels reste nulle, la polarisation de l'impulsion amplifiée de manière régénérative dans le premier amplificateur optique et dans le second amplificateur optique reste une polarisation **s.** Toutes les autres impulsions source 100 polarisées **p** qui traversent la cellule de Pockels produisant un déphasage nul restent polarisées p. Le polariseur 61 rejette toutes les autres impulsions source 100 polarisées **p** hors de la première partie amplificatrice 131 de la cavité régénérative par la sortie S2. La cavité régénératrice est de préférence dimensionnée pour piéger et amplifier une seule impulsion à la fois.

Deux modes d'extraction sont prévus. Un premier mode d'extraction consiste à commuter la tension de modulation de la cellule de Pockels 80 d'un déphasage nul à un déphasage demi-onde lorsqu'une impulsion amplifiée polarisée **s** circule dans la première partie 131 de la cavité régénérative. Lors du passage d'une impulsion amplifiée polarisée **s** à travers la cellule de Pockels 80 activée en direction de la seconde partie 132, l'impulsion amplifiée change de polarisation et devient polarisée **p.** Le polariseur 62 extrait cette impulsion amplifiée, polarisée **p,** de la cavité régénérative et la dirige vers la lame demi-onde 54. La lame demi-onde 54 change à nouveau la polarisation de l'impulsion amplifiée se propageant en direction du polariseur 51 en polarisation **s.** Le polariseur 51 filtre l'impulsion amplifiée polarisée **s** venant de la lame demi-onde 54 et la dirige vers la sortie S1. Ainsi, on obtient un signal principal amplifié 310 constitué d'une impulsion amplifiée sur la sortie S1.

Un second mode d'extraction consiste à commuter la tension de modulation de la cellule de Pockels 80 d'un déphasage nul à un déphasage demi-onde lorsque l'impulsion amplifiée polarisée **s** circule dans la seconde partie amplificatrice 132 de la cavité régénérative. Lors du passage d'une impulsion amplifiée à travers la cellule de Pockels activée en direction de la première partie 131, l'impulsion amplifiée change de polarisation et devient polarisée **p.** Le polariseur 62 extrait cette impulsion amplifiée, polarisée **p,** par la sortie S2 et forme un signal secondaire amplifié 320 polarisé p.

L'avantage de ce mode de fonctionnement est que l'amplification des impulsions se produit pendant que la tension appliquée sur la cellule de Pockels est nulle.

D'une part, la cellule de Pockels est commutée une première fois de manière impulsionnelle (en passant d'un déphasage nul à un déphasage demi-onde pour l'injection, puis immédiatement après d'un déphasage demi-onde à un déphasage nul pour le piégeage) de manière à injecter et piéger une impulsion source dans la cavité régénérative avec une fréquence de répétition fᵣₑₚ constante dans le temps. Ainsi, la cavité régénérative amplifie des impulsions avec une fréquence de répétition constante.

D'autre part, la cellule de Pockels est commutée, également de manière impulsionnelle (en passant d'un déphasage nul à un déphasage demi-onde pour l'extraction d'une impulsion amplifiée, puis immédiatement après l'extraction d'un déphasage demi-onde à un déphasage nul pour la remise au repos de la cellule de Pockels) mais à des instants de commutation sélectionnés en fonction de la sortie souhaitée. Dans un premier cas, lorsque la cellule de Pockels est commutée à un instant où l'impulsion amplifiée circule dans la première partie amplificatrice 131 de la cavité régénérative, l'impulsion amplifiée est extraite sur la voie S1 pour former un signal principal amplifié. Dans un second cas, lorsque la cellule de Pockels est commutée à un instant où l'impulsion amplifiée circule dans la seconde partie amplificatrice 132 de la cavité régénératrice, l'impulsion du signal secondaire amplifié est extraite sur la voie S2 pour former un signal secondaire amplifié. Les impulsions extraites de la cavité régénératrice distribuées spatialement sur les deux sorties S1, S2, tout en étant extraites globalement à la fréquence de répétition fᵣₑₚ de manière à assurer ainsi la stabilité de fonctionnement des amplificateurs optiques 31, 32 de la cavité régénérative.

Les conditions opérationnelles assurant un bon fonctionnement de ce cinquième mode de réalisation sont que la cavité régénérative doit être bloquée avec une tension produisant un déphasage demi-onde et que la vitesse de commutation de la cellule de Pockels doit être suffisamment rapide comparée à la durée de circulation dans la première partie amplificatrice 131 et, respectivement, dans la seconde partie amplificatrice 132 de la cavité régénérative (Tfall < Tpartl, Trise<TpartII). Le temps de commutation d'une cellule de Pockels est en général compris entre ∼1ns et quelques ns.

De préférence, on choisit une première partie amplificatrice 131 et une seconde partie amplificatrice 132 identiques, si bien que la durée T1 d'un aller-retour dans la première partie 131 est égale à la durée T2 d'un aller-retour dans la seconde partie 132. La durée d'un cycle dans la cavité régénérative est approximativement égale à la somme de la durée T1 et de la durée T2. On fait ici l'hypothèse que la période 1/f_{osc} entre deux impulsions source 100 est supérieure à la durée T1, respectivement la durée T2 de manière à ce qu'une seule impulsion circule dans la première partie amplificatrice 131, respectivement dans la seconde partie amplificatrice 132 de la cavité régénérative.

Dans une variante de ce cinquième mode de réalisation, la cavité régénératrice comporte un seul amplificateur optique 31, par exemple dans la première partie.

Selon une alternative à ce cinquième mode de réalisation, on dispose une lame demi-onde entre le polariseur 61 et le polariseur 62. La polarisation des impulsions amplifiées en sortie est ainsi commutée de 90 degrés et l'amplification des impulsions se produit alors lorsque qu'une tension est appliquée à la cellule de Pockels 80.

De plus, selon l'invention, la cellule de Pockels permet d'effectuer une modulation en amplitude du signal amplifié. Par exemple, on détermine la pente de la haute tension appliquée sur la cellule de Pockels lors de l'extraction. Ainsi, en appliquant un décalage temporel de cette pente de haute tension, on applique un déphasage modulé en amplitude entre les valeurs de déphasage nul et de déphasage demi-onde, ce qui permet d'extraire une fraction d'une impulsion sur la sortie S1 et une autre fraction de cette même impulsion sur la sortie S2. La fraction de l'impulsion extraite sur la sortie S1, respectivement S2, peut être contrôlée en ajustant la pente du déphasage en fonction du temps. On obtient ainsi une modulation d'amplitude des impulsions amplifiées sur les sorties S1 et S2.

Selon autre une alternative à ce cinquième mode de réalisation, la première et la seconde partie amplificatrice 131 de la cavité régénérative sont remplacées par une cavité en anneau, comportant un ou plusieurs amplificateurs optiques en série.

L'invention peut être implémentée facilement dans de nombreux types de systèmes lasers impulsionnels pour offrir une grande flexibilité sur la modulation temporelle en cadence et/ou en amplitude des impulsions laser amplifiées, sans faire de compromis sur les performances en termes d'énergie, de puissance, de durée, de qualité spatiale des impulsions en sortie du laser.

L'invention s'applique à tout système laser générant des impulsions laser, quelle que soit la durée d'impulsion, la longueur d'onde, la puissance, l'énergie. L'invention s'applique notamment à la modulation rapide pulse-à-pulse d'un laser à impulsions ayant une fréquence de répétition a priori déterminée. L'invention s'applique aussi à la modulation rapide de l'amplitude d'une impulsion laser amplifiée.

L'invention s'applique tout particulièrement à des lasers à haute et très haute fréquence de répétition, par exemple ayant une fréquence de répétition fᵣₑₚ comprise entre 10 MHz et 1 GHz, et notamment de plusieurs centaines de MHz ou plus. L'invention s'applique notamment aux lasers impulsionnels comportant un oscillateur maître et au moins un étage d'amplification. L'invention s'applique aussi bien à un laser de forte puissance moyenne (du Watt jusqu'à quelques centaines de Watts ou même quelques kilowatt de puissance moyenne supérieure à 50W) qu'à un laser impulsionnel de forte énergie (dans la gamme des centaines de nanojoules au millijoule), où les avantages détaillés dans la description (pas de pertes après la chaine amplificatrice, pas d'élément actif, critique en transmission à haute puissance) sont particulièrement importants.

La vitesse de commutation du sélecteur ou du modulateur d'impulsion disposé en amont du système amplificateur optique, et éventuellement de la deuxième source 12, permettent d'obtenir une modulation très rapide du faisceau principal amplifié, tout en assurant la stabilité du fonctionnement de l'amplificateur optique. Autrement dit, les vitesses de commutation du sélecteur ou du modulateur d'impulsion et éventuellement de la deuxième source sont compatibles avec la modulation d'impulsions lumineuses ultrabrèves dans une gamme de fréquence très élevée, de 10 MHz et 1 GHz, et de préférence de plusieurs centaines de MHz. L'invention propose ainsi un laser à impulsions ultrabrèves, de forte énergie et/ou de forte puissance, modulable dans une très large gamme de fréquence, de manière à pouvoir fournir aussi bien une impulsion ultrabrève à la demande que des impulsions ultrabrèves à fréquence de répétition élevée, jusqu'au GHz, sans risque de détérioration du système amplificateur optique.

## Revendications

1. Système laser à impulsions modulable temporellement en cadence et/ou en amplitude comprenant :
- une première source (10, 11) comprenant un laser à blocage de modes adapté pour générer un signal source (100) constitué d'impulsions lumineuses source
- un système amplificateur optique (30, 31, 32, 33) adapté pour recevoir et amplifier ledit signal source (100), où le système laser à impulsions modulable temporellement comporte :
- un dispositif de sélection ou de modulation d'impulsion (20, 21, 22, 24, 80) comprenant un sélecteur ou modulateur optique d'impulsions (20) disposé entre la première source (11) et le système amplificateur optique (30), le sélecteur ou modulateur optique d'impulsions (20) étant configuré pour sélectionner ou moduler le signal source (100) de manière à former un signal principal (110) constitué d'une ou plusieurs impulsions lumineuses source, le signal principal (110) étant modulé temporellement en cadence et/ou en amplitude ; et
- une deuxième source (12) émettant un signal secondaire (120)
- le système laser étant configuré pour injecter simultanément d'une part le signal principal (110) et d'autre part le signal secondaire (120) dans ledit système amplificateur optique (30, 31, 32, 33), le système amplificateur optique (30, 31, 32, 33) formant, d'une part, un signal principal amplifié (310) modulé temporellement en cadence et/ou en amplitude et, d'autre part, un signal secondaire amplifié (320),
- le signal secondaire (120) étant modulé en temps réel en fonction de la modulation temporelle en cadence et/ou en amplitude du signal principal (110), de manière à stabiliser l'énergie stockée dans le système amplificateur optique (30, 31, 32, 33) en fonction du temps, et
- le système laser étant configuré pour séparer spatialement, sur une première sortie (S1), le signal principal amplifié (310) modulé temporellement en cadence et/ou en amplitude, et, sur une deuxième sortie (S2), le signal secondaire amplifié (320),
**caractérisé en ce que**
la deuxième source (12) comprend une diode laser émettant un signal secondaire (120) comprenant des impulsions secondaires ayant une durée comprise entre 1 et 20 nanosecondes.

2. Système laser à impulsions modulable temporellement selon la revendication 1 dans lequel le système amplificateur optique (30, 33) a une bande spectrale de gain adaptée pour amplifier le signal principal (110) à une première longueur d'onde et le signal secondaire (120) à une seconde longueur d'onde, et dans lequel le système laser comporte un filtre spectral (50) configuré pour séparer spectralement le signal principal amplifié (310) à la première longueur d'onde et le signal secondaire amplifié (320) à la seconde longueur d'onde.

3. Système laser à impulsions modulable temporellement selon la revendication 1 ou 2 dans lequel le système amplificateur optique (30) est adapté pour recevoir et amplifier le signal principal (110) polarisé suivant un premier état de polarisation et, respectivement, le signal secondaire (120) polarisé suivant un deuxième état de polarisation, lesdits premier et deuxième états de polarisation étant orthogonaux entre eux et dans lequel le système laser comporte un filtre séparateur de polarisation (50, 90) disposé et configuré pour séparer, d'une part, le signal principal amplifié (310) polarisé suivant le premier état de polarisation et, d'autre part, le signal secondaire amplifié (320) polarisé suivant le deuxième état de polarisation.

4. Système laser à impulsions modulable temporellement selon la revendication 1, dans lequel le système amplificateur optique (33) est adapté pour amplifier le signal principal (110) et le signal secondaire (120) se propageant en sens mutuellement opposés entre une première entrée-sortie (331) et une deuxième entrée-sortie (332) du système amplificateur optique (33) et dans lequel le système laser comporte au moins un filtre optique (51, 52) disposé et configuré pour séparer, d'une part, le signal principal amplifié (310) et, d'autre part, le signal secondaire amplifié (320).

5. Système laser à impulsions modulable temporellement selon la revendication 1, dans lequel le système amplificateur optique (30) présente une ouverture spatiale et/ou angulaire adaptée pour amplifier le signal principal (110) se propageant suivant une première direction et le signal secondaire (120) se propageant suivant une deuxième direction, la deuxième direction étant séparée spatialement et/ou angulairement de la première direction, et dans lequel le système laser est configuré pour séparer spatialement et/ou angulairement le signal principal amplifié (310) se propageant suivant la première direction et, respectivement, le signal secondaire amplifié (320) se propageant suivant la deuxième direction.

6. Système laser à impulsions modulable temporellement selon l'une des revendications 1 à 5, comportant en outre un combineur optique de faisceau (60, 51, 52) disposé et configuré pour injecter d'une part le signal principal (110) et d'autre part le signal secondaire (120) dans ledit système amplificateur optique (30, 31, 32, 33).

7. Système laser à impulsions modulable temporellement selon l'une des revendications 1 à 6 dans lequel le dispositif de sélection ou de modulation d'impulsion comporte un modulateur optique de polarisation, le modulateur optique étant configuré pour recevoir et moduler en polarisation le signal source (100) de manière à générer le signal principal (110) polarisé suivant le premier état de polarisation, et à générer le signal secondaire (120) polarisé suivant le deuxième état de polarisation.

8. Système laser à impulsions modulable temporellement selon l'une des revendications 1 à 6 dans lequel le dispositif de sélection ou de modulation d'impulsion comporte un modulateur optique de direction configuré pour recevoir et moduler le signal source (100) de manière à générer le signal principal (110) se propageant suivant une direction, et à générer le signal secondaire (120) se propageant suivant une autre direction.

9. Système laser à impulsions modulable temporellement selon l'une des revendications 1 à 8 dans lequel le dispositif de sélection ou de modulation d'impulsion comporte un modulateur optique configuré pour recevoir et moduler en amplitude le signal source (100) de manière à générer le signal principal (110) modulé en amplitude, et dans lequel le signal secondaire (120) est modulé en amplitude en fonction de la modulation temporelle d'amplitude du signal principal (110).

10. Système laser à impulsions modulable temporellement comprenant une première source (10) adaptée pour générer un signal source (100) constitué d'impulsions lumineuses source, et un système amplificateur optique adapté pour recevoir et amplifier ledit signal source (100), dans lequel le système amplificateur optique comporte:
une cavité régénératrice comportant une première partie (131) comprenant un premier amplificateur optique (31) et une deuxième partie (132);
- un dispositif de modulation d'impulsion comprenant une cellule de Pockels (80) disposée dans la cavité régénératrice entre la première partie (131) et la deuxième partie (132), la cellule de Pockels (80) étant configurée pour moduler un déphasage optique dans la cavité régénératrice; et
- un dispositif de filtrage optique comportant un premier polariseur (61) disposé entre la cellule de Pockels (80) et la première partie (131) de la cavité, et un deuxième polariseur (62) disposé entre la cellule de Pockels (80) et la deuxième partie (132) de la cavité,
la cellule de Pockels (80) étant configurée pour moduler le déphasage optique une première fois par application d'une première tension de commutation impulsionnelle à la cellule de Pockels (80) de manière à piéger dans la cavité régénératrice une impulsion lumineuse source (100), la cavité régénératrice amplifiant l'impulsion lumineuse piégée pour former une impulsion lumineuse amplifiée tout en appliquant une tension de modulation nulle à la cellule de Pockels, la cellule de Pockels (80) étant configurée pour moduler le déphasage optique une deuxième fois par application d'une deuxième tension de commutation à la cellule de Pockels (80), la deuxième tension ayant une pente en fonction du temps, soit lorsque l'impulsion lumineuse amplifiée circule dans la première partie (131) de la cavité régénératrice pour former un signal principal amplifié (310) modulé en amplitude de manière analogique, le deuxième polariseur (62) étant configuré de manière à diriger le signal principal amplifié (310) modulé en amplitude de manière analogique vers une première sortie (S1) de la cavité régénératrice, soit lorsque l'impulsion lumineuse amplifiée circule dans la deuxième partie (132) de la cavité régénératrice pour former un signal secondaire amplifié (320), le premier polariseur (61) étant configuré de manière à diriger le signal secondaire amplifié (320) vers une deuxième sortie (S2) de la cavité régénératrice.

11. Système laser à impulsions modulable temporellement selon l'une des revendications 1 à 10 dans lequel le dispositif de modulation d'impulsion (20, 21, 22, 24, 80) est configuré pour moduler le signal source (100) avec un temps de commutation compris entre sub-ns et quelques ns.

12. Système laser à impulsions modulable temporellement selon l'une des revendications 1 à 10 dans lequel la première source (10, 11) est périodique de période de répétition comprise entre 10 kHz et 1 GHz.

13. Méthode de modulation en amplitude des impulsions en sortie d'une cavité régénératrice comportant une cellule de Pockels (80) disposée entre un premier polariseur et un deuxième polariseur dans la cavité régénératrice, la cellule de Pockels délimitant une première partie (131) et une deuxième partie (132) de la cavité régénératrice et la cavité régénératrice comportant au moins un amplificateur optique (31) disposé dans la première partie (131) de la cavité régénératrice, la méthode comprenant les étapes suivantes :
- Application d'une première tension de commutation impulsionnelle à la cellule de Pockels (80) de manière à injecter et à piéger une impulsion lumineuse source (100) dans la cavité régénératrice ;
- Amplification de l'impulsion lumineuse piégée la cavité régénératrice pour former une impulsion lumineuse amplifiée, tout en appliquant une tension de modulation nulle à la cellule de Pockels ;
- Application d'une deuxième tension de commutation impulsionnelle à la cellule de Pockels (80) pour moduler le déphasage optique lorsque l'impulsion lumineuse amplifiée circule dans la première partie (131) de la cavité régénératrice pour former un signal principal amplifié (310), le deuxième polariseur (62) étant configuré de manière à diriger le signal principal amplifié (310) vers une première sortie (S1) de la cavité régénératrice, et/ou lorsque l'impulsion lumineuse amplifiée circule dans la deuxième partie (132) de la cavité régénératrice pour former un signal secondaire amplifié (320), le premier polariseur (61) étant configuré de manière à diriger le signal secondaire amplifié (320) vers une deuxième sortie (S2) de la cavité régénératrice, dans laquelle l'application de la deuxième tension de commutation impulsionnelle comporte une pente en fonction du temps de manière à moduler en amplitude le signal principal amplifié (310) vers la première sortie (S1) et/ou le le signal secondaire amplifié (320) vers la deuxième sortie (S2).

## Patentansprüche

1. Hinsichtlich der Kadenz und/oder der Amplitude zeitlich modulierbares Impulslasersystem mit
- einer ersten Quelle (10, 11), die einen modengekoppelten Laser aufweist, der dazu ausgelegt ist, ein aus Quellenlichtimpulsen gebildetes Quellensignal (100) zu erzeugen,
- einem optischen Verstärkersystem (30, 31, 32, 33), das dazu ausgelegt ist, das Quellensignal (100) zu empfangen und zu verstärken,
wobei das zeitlich modulierbare Impulslasersystem
- eine Impulswähl- oder -modulationsvorrichtung (20, 21, 22, 24, 80), die einen zwischen der ersten Quelle (11) und dem optischen Verstärkersystem (30) angeordneten optischen Impulswähler oder -modulator (20) aufweist, wobei der optische Impulswähler oder -modulator (20) dazu ausgelegt ist, das Quellensignal (100) derart auszuwählen oder zu modulieren, daß ein aus einem oder mehreren Quellenlichtimpulsen gebildetes Hauptsignal (110) gebildet wird, wobei das Hauptsignal (110) hinsichtlich der Kadenz und/oder der Amplitude zeitlich moduliert ist, und
- eine ein Sekundärsignal (120) ausstrahlende zweite Quelle (12) aufweist,
- wobei das Lasersystem dazu ausgelegt ist, einerseits das Hauptsignal (110) und andererseits das Sekundärsignal (120) gleichzeitig in das optische Verstärkersystem (30, 31, 32, 33) einzuspeisen, wobei das optische Verstärkersystem (30, 31, 32, 33) einerseits ein hinsichtlich der Kadenz und/oder der Amplitude zeitlich moduliertes verstärktes Hauptsignal (310) und andererseits ein verstärktes Sekundärsignal (320) bildet,
- wobei das Sekundärsignal (120) in Echtzeit in Abhängigkeit von der hinsichtlich der Kadenz und/oder der Amplitude zeitlichen Modulation des Hauptsignals (110) moduliert wird, um die im optischen Verstärkersystem (30, 31, 32, 33) in Abhängigkeit von der Zeit gespeicherte Energie zu stabilisieren, und
- wobei das Lasersystem dazu ausgelegt ist, das hinsichtlich der Kadenz und/oder der Amplitude zeitlich modulierte verstärkte Hauptsignal (310) an einem ersten Ausgang (S1) und das verstärkte Sekundärsignal (320) an einem zweiten Ausgang (S2) räumlich zu trennen,
**dadurch gekennzeichnet, daß** die zweite Quelle (12) eine ein Sekundärsignal (120) mit Sekundärimpulsen, die eine Dauer zwischen 1 und 20 Nanosekunden haben, ausstrahlende Laserdiode aufweist.

2. Zeitlich modulierbares Impulslasersystem gemäß Anspruch 1, bei dem das optische Verstärkersystem (30, 33) ein spektrales Verstärkerband aufweist, das dazu ausgelegt ist, das Hauptsignal (110) bei einer ersten Wellenlänge und das Sekundärsignal (120) bei einer zweiten Wellenlänge zu verstärken, und bei dem das Lasersystem ein Spektralfilter (50) aufweist, das dazu ausgelegt ist, das bei der ersten Wellenlänge verstärkte Hauptsignal (310) und das bei der zweiten Wellenlänge verstärkte Sekundärsignal (320) spektral zu trennen.

3. Zeitlich modulierbares Impulslasersystem gemäß Anspruch 1 oder 2, bei dem das optische Verstärkersystem (30) dazu ausgelegt ist, das gemäß einem ersten Polarisationszustand polarisierte Hauptsignal (110) und das gemäß einem zweiten Polarisationszustand polarisierte Sekundärsignal (120) zu empfangen und zu verstärken, wobei der erste und der zweite Polarisationszustand zueinander rechtwinklig sind, und bei dem das Lasersystem ein Polarisationstrennfilter (50, 90) aufweist, das dazu angeordnet und ausgelegt ist, das gemäß dem ersten Polarisationszustand polarisierte Hauptsignal (110) einerseits und das gemäß dem zweiten Polarisationszustand polarisierte Sekundärsignal (120) andererseits zu trennen.

4. Zeitlich modulierbares Impulslasersystem gemäß Anspruch 1, bei dem das optische Verstärkersystem (33) dazu ausgelegt ist, das Hauptsignal (110) und das Sekundärsignal (120), die sich in entgegengesetzten Richtungen zwischen einem ersten Eingang-Ausgang (331) und einem zweiten Eingang-Ausgang 332) des optischen Verstärkersystems (33) ausbreiten, zu verstärken, und bei dem das Lasersystem wenigstens ein optisches Filter (51, 52) aufweist, das dazu angeordnet und ausgelegt ist, das verstärkte Hauptsignal (310) einerseits und das verstärkte Sekundärsignal (320) andererseits zu trennen.

5. Zeitlich modulierbares Impulslasersystem gemäß Anspruch 1, bei dem das optische Verstärkersystem (30) eine räumliche und/oder winkelmäßige Öffnung aufweist, die dazu ausgelegt ist, das sich in einer ersten Richtung ausbreitende Hauptsignal (110) und das sich in einer zweiten Richtung ausbreitende Sekundärsignal (120) zu verstärken, wobei die zweite Richtung räumlich und/oder winkelmäßig von der ersten Richtung getrennt ist, und bei dem das Lasersystem dazu ausgelegt ist, das sich in der ersten Richtung ausbreitende Hauptsignal (110) und das sich in der zweiten Richtung ausbreitende Sekundärsignal (120) räumlich und/oder winkelmäßig zu trennen.

6. Zeitlich modulierbares Impulslasersystem gemäß einem der Ansprüche 1 bis 5, das außerdem einen optischen Strahlenkombinator (60, 51, 52) aufweist, der dazu angeordnet und ausgelegt ist, einerseits das Hauptsignal (110) und andererseits das Sekundärsignal (120) in das optische Verstärkersystem (30, 31, 32, 33) einzugeben.

7. Zeitlich modulierbares Impulslasersystem gemäß einem der Ansprüche 1 bis 5, bei dem die Impulswähl- oder -modulationsvorrichtung einen optischen Polarisationsmodulator aufweist, wobei der optische Modulator dazu ausgelegt ist, das Quellensignal (100) zu empfangen und polarisationsmäßig zu modulieren, um das gemäß dem ersten Polarisationszustand polarisierte Hauptsignal (110) zu erzeugen und das gemäß dem zweiten Polarisationszustand polarisierte Sekundärsignal (120) zu erzeugen.

8. Zeitlich modulierbares Impulslasersystem gemäß einem der Anspräche 1 bis 6, bei dem die Impulswähl- oder -modulationsvorrichtung einen optischen Richtungsmodulator aufweist, der dazu ausgelegt ist, das Quellensignal (100) zu empfangen und so zu modulieren, daß das sich in einer Richtung ausbreitende Hauptsignal (110) erzeugt wird und daß das sich in einer anderen Richtung ausbreitende Sekundärsignal (120) erzeugt wird.

9. Zeitlich modulierbares Impulslasersystem gemäß einem der Ansprüche 1 bis 8, bei dem die Impulswähl- oder -modulationsvorrichtung einen optischen Modulator aufweist, der dazu ausgelegt ist, das Quellensignal (100) zu empfangen und amplitudenmäßig so zu modulieren, daß das amplitudenmäßig modulierte Hauptsignal (110) erzeugt wird, und bei dem das Sekundärsignal (120) amplitudenmäßig in Abhängigkeit von der zeitlichen Amplitudenmodulation des Hauptsignals (110) moduliert wird.

10. Zeitlich modulierbares Impulslasersystem mit einer ersten Quelle (10), die dazu ausgelegt ist, ein aus Quellenlichtimpulsen gebildetes Quellensignal (100) zu erzeugen, und einem optischen Verstärkersystem, das dazu ausgelegt ist, das Quellensignal (100) zu empfangen und zu verstärken, bei dem das optische Verstärkersystem
- einen regenerativen Hohlraum mit einem einen ersten optischen Verstärker (31) aufweisenden ersten Teil (131) und einem zweiten Teil (132),
- eine Impulsmodulationsvorrichtung mit einer im regenerativen Hohlraum zwischen dem ersten Teil (131) und dem zweiten Teil (132) angeordneten Pockelszelle (80), wobei die Pockelszelle (80) dazu ausgelegt ist, eine optische Phasenverschiebung im regenerativen Hohlraum zu modulieren, und
- eine optische Filtervorrichtung mit einem zwischen der Pockelszelle (80) und dem ersten Teil (131) des Hohlraums angeordneten ersten Polarisator (61) und einem zwischen der Pockelszelle (80) und dem zweiten Teil (132) des Hohlraums angeordneten zweiten Polarisator (62)
aufweist,
wobei die Pockelszelle (80) dazu ausgelegt ist, die optische Phasenverschiebung ein erstes Mal durch Anlegen einer ersten Impulsschaltspannung an die Pockelszelle (80) so zu modulieren, daß im regenerativen Hohlraum ein Quellenlichtimpuls eingefangen wird, wobei der regenerative Hohlraum den eingefangenen Lichtimpuls verstärkt, um einen verstärkten Lichtimpuls zu bilden, und dabei eine Nullmodulationsspannung an die Pockelszelle anlegt, wobei die Pockelszelle (80) dazu ausgelegt ist, die optische Phasenverschiebung ein zweites Mal durch Anlegen einer zweiten Impulsschaltspannung an die Pockelszelle (80) zu modulieren, wobei die zweite Spannung eine zeitabhängige Steilheit aufweist, und zwar entweder wenn der verstärkte Lichtimpuls im ersten Teil (131) des regenerativen Hohlraums umläuft, um ein in analoger Weise amplitudenmoduliertes verstärktes Hauptsignal (310) zu bilden, wobei der zweite Polarisator (62) dazu ausgelegt ist, das in analoger Weise amplitudenmodulierte verstärkte Hauptsignal (310) auf einen ersten Ausgang (S1) des regenerativen Hohlraums zu richten, oder wenn der verstärkte Lichtimpuls im zweiten Teil (132) des regenerativen Hohlraums umläuft, um ein verstärktes Sekundärsignal (320) zu bilden, wobei der erste Polarisator (61) dazu ausgelegt ist, das verstärkte Sekundärsignal (320) auf einen zweiten Ausgang (S2) des regenerativen Hohlraums zu richten.

11. Zeitlich modulierbares Impulslasersystem gemäß einem der Ansprüche 1 bis 10, bei dem die Impulsmodulationsvonichtung (20, 21, 22, 24, 80) dazu ausgelegt ist, das Quellensignal (100) mit einer Schaltzeit zwischen Subnanosekunden und einigen Nanosekunden zu modulieren,

12. Zeitlich modulierbares Impulslasersystem gemäß einem der Ansprüche 1 bis 10, bei dem die erste Quelle (10, 11) periodisch mit einer Wiederholungsperiode zwischen 10 kHz und 1 GHz ist.

13. Verfahren zur Amplitudenmodulation von Impulsen am Ausgang eines regenerativen Hohlraums, der eine im regenerativen Hohlraum zwischen einem ersten Polarisator und einem zweiten Polarisator angeordnete Pockelszelle (80) aufweist, wobei die Pockelszelle einen ersten Teil (131) und einen zweiten Teil (132) des regenerativen Hohlraums abgrenzt und der regenerative Hohlraum wenigstens einen im ersten Teil (131) des regenerativen Hohlraums angeordneten optischen Verstärker (31) aufweist, wobei das Verfahren die folgenden Schritte aufweist:
- Anlegen einer ersten Impulsschaltspannung an die Pockelszelle (80), um einen Quellenlichtimpuls (100) in den regenerativen Hohlraum einzubringen und einzufangen,
- Verstärken des im regenerativen Hohlraum eingefangenen Lichtimpulses, um einen verstärkten Lichtimpuls zu bilden, und dabei Anlegen einer Nullmodulationsspannung an die Pockelszelle,
- Anlegen einer zweiten Impulsschaltspannung an die Pockelszelle (80), um die optische Phasenverschiebung zu modulieren, wenn der verstärkte Lichtimpuls im ersten Teil (131) des regenerativen Hohlraums umläuft, um ein verstärktes Hauptsignal (310) zu bilden, wobei der zweite Polarisator (62) dazu ausgelegt ist, das verstärkte Hauptsignal (310) auf einen ersten Ausgang (S1) des regenerativen Hohlraums zu richten, und/oder wenn der verstärkte Lichtimpuls im zweiten Teil (132) des regenerativen Hohlraums umläuft, um ein verstärktes Sekundärsignal (320) zu bilden, wobei der erste Polarisator (61) dazu ausgelegt ist, das verstärkte Sekundärsignal (320) auf einen zweiten Ausgang (S2) des regenerativen Hohlraums zu richten,
wobei das Anlegen der zweiten Impulsschaltspannung eine zeitabhängige Steilheit aufweist, um das verstärkte Hauptsignal (310) zum ersten Ausgang (S1) und/oder das verstärkte Sekundärsignal (320) zum zweiten Ausgang (S2) zu modulieren.

## Claims

1. A temporally modulated in rate and/or amplitude pulse laser system, comprising:
- a first source (10, 11) comprising a mode-locking laser adapted to generate a source signal (100) composed of source light pulses;
- an optical amplifier system (30, 31, 32, 33) adapted to receive and amplify said source signal (100),
wherein the temporally modulated pulse laser system includes:
- a pulse selection or modulation device (20, 21, 22, 24, 80) comprising a pulse selector or modulator arranged between the first source (11) and the optical amplifier system (30), the pulse selector or modulator (20) being configured to select or modulate the source signal (100) so as to form a main signal (110) composed of one or more source light pulses, the main signal (110) being temporally modulated in rate and/or amplitude; and
- a second source (12) emitting a secondary signal (120),
- the laser system being configured to inject simultaneously, on the one hand, the main signal (110) and, on the other hand, the secondary signal (120) into said optical amplifier system (30, 31, 32, 33), the optical amplifier system (30, 31, 32, 33) forming, on the one hand, an amplified main signal (310) that is temporally modulated in rate and/or amplitude and, on the other hand, an amplified secondary signal (320),
- the secondary signal (120) being modulated in real time as a function of the temporal modulation in rate and/or amplitude of the main signal (110), so as to stabilize the energy stored in the optical amplifier system (30, 31, 32, 33) as a function of time, and
- the laser system being configured to spatially separate, to a first output (S1), the temporally modulated in rate and/or amplitude amplified main signal (310), and, to a second output (S2,) the amplified secondary signal (320),
**characterized in that**:
- the second source comprises a laser diode emitting a secondary signal (120) comprising secondary light pulses having a duration comprised between 1 and 20 nanoseconds.

2. The temporally modulated pulse laser system according to claim 1, wherein the optical amplifier system (30, 33) has a spectral gain band adapted to amplify the main signal (110) at a first wavelength and the secondary signal (120) at a second wavelength, and wherein the laser system includes a spectral filter (50) configured to spectrally separate the amplified main signal (310) at the first wavelength and the amplified secondary signal (320) at the second wavelength.

3. The temporally modulated pulse laser system according to claim 1 or 2, wherein the optical amplifier system (30) is adapted to receive and amplify the main signal (110) polarized in a first polarization state and, respectively, the secondary signal (120) polarized in a second polarization state, said first and second polarization states being orthogonal to each other, and wherein the laser system includes a polarizing separation filter (50, 90) arranged and configured to separate, on the one hand, the amplified main signal (310) polarized in the first polarization state and, on the other hand, the amplified secondary signal (320) polarized in the second polarization state.

4. The temporally modulated pulse laser system according to claim 1, wherein the optical amplifier system (33) is adapted to amplify the main signal (110) and the secondary signal (120) propagating along mutually opposed senses between a first input-output (331) and a second input-output (332) of the optical amplifier system (33) and wherein the laser system includes at least one optical filter (51, 52) arranged and configured to separate, on the one hand, the amplified main signal (310) and, on the other hand, the amplified secondary signal (320).

5. The temporally modulated pulse laser system according to claim 1, wherein the optical amplifier system (30) presents a spatial and/or angular aperture adapted to amplify the main signal (110) propagating along a first direction and the secondary signal (120) propagating along a second direction, the second direction being spatially and/or angularly separated from the first direction, and wherein the laser system is configured to spatially and/or angularly separate the amplified main signal (310) propagating along the first direction and, respectively, the secondary amplified signal (320) propagating along the second direction.

6. The temporally modulated pulse laser system according to one of claims 1 to 5, further including an optical beam combiner (60, 51, 52) arranged and configured to inject, on the one hand, the main signal (110) and, on the other hand, the secondary signal (120) into said optical amplifier system (30, 31, 32, 33).

7. The temporally modulated pulse laser system according to one of claims 1 to 6, wherein the pulse selection or modulation device includes an optical polarization modulator, the optical modulator being configured to receive and modulate in polarization the source signal (100) so as to generate the main signal (110) polarized in the first polarization state, and to generate the secondary signal (120) polarized in the second polarization state.

8. The temporally modulated pulse laser system according to one of claims 1 to 6, wherein the pulse selection or modulation device includes an optical direction modulator configured to receive and modulate the source signal (100) so as to generate the main signal (110) propagating along one direction, and to generate the secondary signal (120) propagating along another direction.

9. The temporally modulated pulse laser system according to one of claims 1 to 8, wherein the pulse selection or modulation device includes an optical modulator configured to receive and modulate the source signal (100) in amplitude so as to generate the amplitude-modulated main signal (110), and wherein the secondary signal (120) is modulated in amplitude as a function of the temporal amplitude modulation of the main signal (110).

10. A temporally modulated pulse laser system comprising a first source (10) adapted to generate a source signal (100) composed of source light pulses, and an optical amplifier system adapted to receive and amplify said source signal (100), wherein the optical amplifier system comprises :
- a regenerative cavity including a first part (131) comprising a first optical amplifier (31) and a second part (132);
- a pulse modulation device comprising a Pockels cell (80) arranged in the regenerative cavity between the first part (131) and the second part (132), the Pockels cell (80) being configured to modulate an optical phase shift in the regenerative cavity; and
- an optical filtering device including a first polarizer (61) arranged between the Pockels cell (80) and the first part (131) of the cavity, and a second polarizer (62) arranged between the Pockels cell (80) and the second part (132) of the cavity,
the Pockels cell being configured to modulate the optical phase shift a first time by applying a first pulse switching voltage to the Pockels cell (80) so as to trap a source light pulse (100) into the regenerative cavity, the regenerative cavity amplifying the trapped light pulse to form an amplified light pulse while applying a zero modulation voltage to the Pockels cell, the Pockels cell (80) being configured to modulate the optical phase shift a second time by applying a second pulse switching voltage to the Pockels cell (80), the second pulse switching voltage including a slope as a function of time, either when the amplified light pulse circulates in the first part (131) of the regenerative cavity to form an amplified main signal (310) analogically modulated in amplitude, the second polarizer (62) being configured so as to direct the amplified main signal (310) analogically modulated in amplitude towards a first output (S1) of the regenerative cavity, or when the amplified light pulse circulates in the second part (132) of the regenerative cavity to form an amplified secondary signal (320), the first polarizer (61) being configured so as to direct the amplified secondary signal (320) towards a second output (S2) of the regenerative cavity.

11. The temporally modulated pulse laser system according to one of claims 1 to 10, wherein the modulation device (20, 21, 22, 24, 80) is configured to modulate the source signal (100) with a switching time comprised between sub-ns and a few ns.

12. The temporally modulated pulse laser system according to one of claims 1 to 10, wherein the first source (10, 11) is periodic with a repetition period comprised between 10 kHz and 1 GHz.

13. A method of modulation in amplitude of pulses at an output of a regenerative cavity including a Pockels cell (80) arranged between a first polarizer and a second polarizer in the regenerative cavity, the Pockels cell delimiting a first part (131) and a second part (132) of the regenerative cavity and the regenerative cavity including at least one optical amplifier (31) arranged in the first part (131) of the regenerative cavity, the method comprising the following steps:
- applying a first pulse switching voltage to the Pockels cell (80) so as to inject and trap a source light pulse (100) into the regenerative cavity;
- amplifying the light pulse trapped into the regenerative cavity to form an amplified light pulse, while applying a zero modulation voltage to the Pockels cell;
- applying a second pulse switching voltage to the Pockels cell (80) to modulate the optical phase shift when the amplified light pulse circulates in the first part (131) of the regenerative cavity to form an amplified main signal (310), the second polarizer (62) being configured so as to direct the amplified main signal (310) towards a first output (S1) of the regenerative cavity, and/or when the amplified light pulse circulates in the second part (132) of the regenerative cavity to form an amplified secondary signal (320), the first polarizer (61) being configured so as to direct the amplified secondary signal (320) towards a second output (S2) of the regenerative cavity, wherein the application of the second pulse switching voltage includes a slope as a function of time so as to modulate in amplitude the amplified main signal (310) towards the first output (S1) and/or the amplified secondary signal (320) towards the second output (S2).
